Europäisches Patentamt

European Patent Office

Office européen des brevets

(19)

(11) Numéro de publication : **0 016 497**
**B1**

(12) **FASCICULE DE BREVET EUROPÉEN**

(45) Date de publication du fascicule du brevet :
**01.06.83**

(21) Numéro de dépôt : **80200220.4**

(22) Date de dépôt : **07.03.80**

(51) Int. Cl.³ : **B 60 R 9/10**

(54) **Supports pour cycles.**

(30) Priorité : **16.03.79 FR 7906699**

(43) Date de publication de la demande :
**01.10.80 Bulletin 80/20**

(45) Mention de la délivrance du brevet :
**01.06.83 Bulletin 83/22**

(84) Etats contractants désignés :
**AT BE CH DE GB IT LU NL SE**

(56) Documents cités :
**US A 3 710 999**
**US A 3 752 375**
**US A 3 847 317**
**US A 3 877 622**
**US A 4 085 874**

(73) Titulaire : **Hamel, Jacques Robert**
**112 Ter Avenue de Suffren**
**F-75015 Paris (FR)**
**Mercier, Yannic, Pierre, Jean**
**15 Avenue Gambetta**
**F-92410 Ville d'Avray (FR)**

(72) Inventeur : **Hamel, Jacques Robert**
**112 Ter Avenue de Suffren**
**F-75015 Paris (FR)**
Inventeur : **Mercier, Yannic, Pierre, Jean**
**15 Avenue Gambetta**
**F-92410 Ville d'Avray (FR)**

(74) Mandataire : **Vander-Heym, Roger**
**172 Boulevard Voltaire**
**F-75011 Paris (FR)**

EP 0 016 497 B1

Supports pour cycles

La présente invention est relative à des perfectionnements aux supports pour cycles du genre de ceux permettant d'accrocher un cycle transversalement derrière un véhicule automobile.

En l'état actuel de la technique on connaît des supports constitués par deux montants fixés par leur extrémité inférieure sur le pare-chocs arrière du véhicule automobile et réunis, à leur partie supérieure, au moyen d'une traverse horizontale comportant au moins deux potences sur lesquelles le tube supérieur du cadre du cycle à transporter peut reposer.

Un tel dispositif présente deux inconvénients majeurs :
— sa fixation sur le pare-chocs nécessite l'utilisation de brides boulonnées dont la mise en place est délicate et dont la forme est fonction de celle du pare-chocs ;
— il ne se prête pas au transport de cycles dépourvus de tubes supérieurs horizontaux tels que ceux dits mixtes ou ceux pour dames.

Par le brevet US-A-3 710 999 on connaît un dispositif de fixation d'un porte-vélo derrière un véhicule selon lequel l'armature du porte-vélo est plaquée contre la carrosserie sous l'effet de la tension, d'au moins, deux sangles dont une s'accroche à la partie supérieure du couvercle de la malle tandis que la seconde s'accroche sous le bord inférieur du pare-chocs. Ce dispositif ne donne pas satisfaction car le poids de la charge est supporté par des organes fragiles : charnières ou carrosserie.

La présente invention qui remédie à ces inconvénients est remarquable en ce que la fixation de chaque montant du support sur le pare-chocs s'effectue à l'aide de deux sangles inextensibles présentant chacune un crochet à l'une de leurs extrémités pour saisir respectivement le bord supérieur et celui inférieur du pare-chocs, les deux autres extrémités desdites sangles étant rendues solidaires dudit montant et l'une, au moins, étant soumise à l'action d'un dispositif de mise en tension.

Selon une autre caractéristique de l'invention, les potences de support du cycle peuvent être fixées à des niveaux différents sur les montants du support, et/ou, de la traverse supérieure.

L'invention sera mieux comprise par la description qui va suivre, faite en se référant aux dessins annexés à titre d'exemple indicatif seulement, sur lesquels :

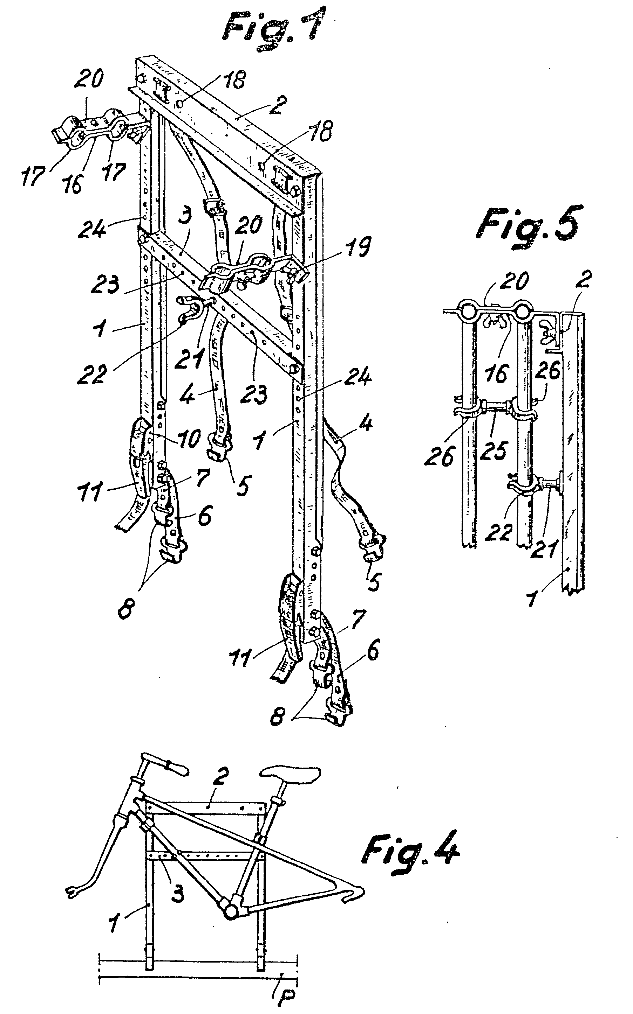

la figure 1 est une vue en perspective montrant le support de l'invention ;

la figure 2 est une vue de côté schématique montrant, à petite échelle, la fixation du support derrière un véhicule automobile ;

la figure 3 est une vue partielle, en coupe verticale, et à plus grande échelle, montrant la fixation de l'extrémité inférieure d'un montant sur un pare-chocs ;

la figure 4 est une vue schématique montrant la possibilité d'accrocher un cycle présentant un cadre dit mixte ;

la figure 5 est une vue partielle schématique montrant la possibilité d'immobiliser deux cycles par rapport au support.

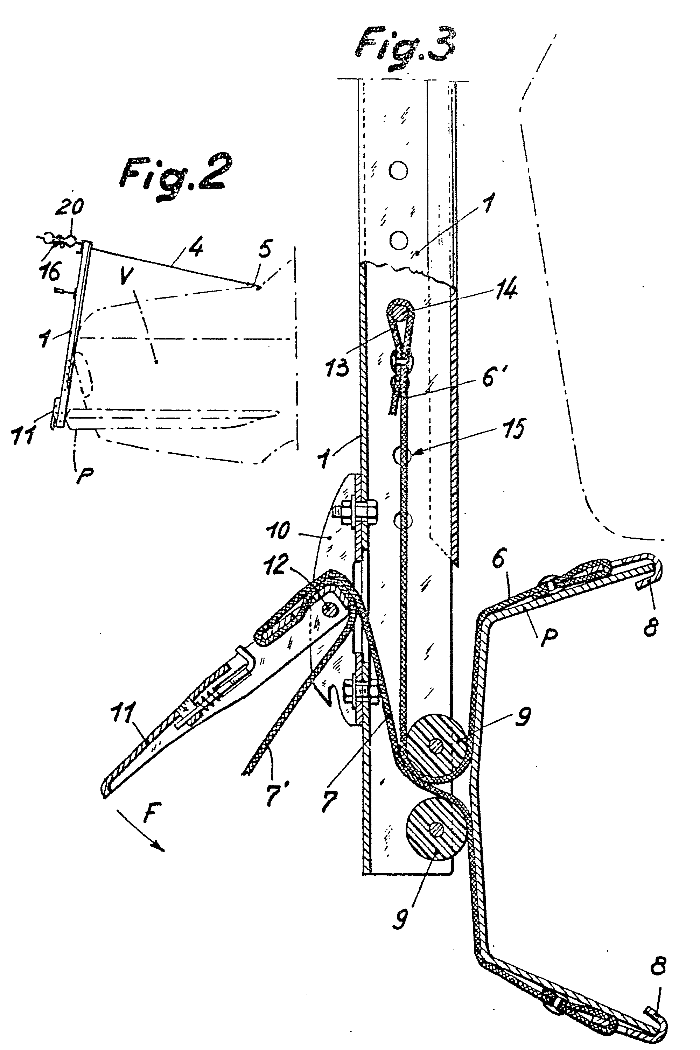

En se reportant aux dessins, on voit que, de la façon connue, le support de l'invention est constitué, dans sa formule la plus simple, par deux montants 1 réunis par des traverses 2 et 3, lesdits montants étant fixés par leur extrémité inférieure sur le pare-chocs arrière P d'un véhicule V (figure 2).

De la façon connue, la traverse 2 comporte deux sangles 4 pourvues, à leur extrémité libre, d'un crochet 5 susceptible d'être placé sur le bord antérieur du coffre arrière du véhicule, la mise en tension des sangles plaquant les montants 1 contre ledit coffre (figure 2).

Selon l'invention, la fixation de l'extrémité inférieure de chaque montant 1 sur le pare-chocs P s'effectue à l'aide de deux sangles 6 et 7 inextensibles, chaque sangle présentant à une de ses extrémités un crochet 8 pouvant être engagé sur l'un des bords du pare-chocs (figure 3).

Les sangles 6 et 7 passent entre deux galets 9 sur lesquels elles s'enroulent partiellement.

L'extrémité libre 6' de la sangle 6 est rendue solidaire du montant 1 tandis que celle 7' de la sangle 7 est rendue solidaire d'un dispositif permettant de la tendre.

Un tel dispositif est connu et peut être constitué, par exemple, au moyen d'une chape 10 entre les branches de laquelle s'articule un levier 11 par l'entremise d'un axe 12. L'extrémité libre 7' est fixée d'une façon réglable au levier 11 et s'enroule partiellement sur celui-ci autour de son articulation.

En faisant pivoter le levier 11 selon la flèche F on tend la sangle 7 et cela a pour effet simultané de tendre celle 6 et d'appliquer le montant 1 contre le pare-chocs P par l'entremise des galets 9.

Selon l'invention, l'extrémité 6' de la sangle 6 présente une boucle 13 dans laquelle peut passer un axe 14 traversant le montant 1 par des trous 15 de ce dernier. De cette façon, en prévoyant dans le montant 1 des trous 15 étagés, il est possible de faire varier la position du point d'accrochage de la sangle 6 pour adapter la longueur de celle-ci aux dimensions du pare-chocs.

Selon une autre caractéristique de l'invention des moyens sont prévus pour fixer les potences 16 sur les montants 1 et permettre l'inclinaison des berceaux 17 prévus sur ces dernières.

De plus, les points de fixation des potences peuvent être situés à des niveaux différents.

Cette disposition permet, comme le montre la figure 4 d'accrocher sur le support un cycle ne présentant pas de tube horizontal. Naturellement, les potences peuvent aussi être fixées sur la traverse 2 et celle-ci comporte donc des trous 18 de passage des boulons 19 de fixation des dites potences.

Des brides 20 peuvent être utilisées pour maintenir le cycle sur les potences qui, comme le montre le dessin, sont conçues pour recevoir deux cycles.

L'immobilisation d'un cycle par rapport au support, pour éviter qu'il heurte ce dernier, est assurée par au moins une chandelle 21 présentant à une des extrémités un collier ouvert 22 dont les branches peuvent enserrer élastiquement l'un des tubes du cadre du cycle (figure 5). La chandelle 21 est avantageusement fixée sur la traverse 3 qui présente une pluralité de trous de fixation 23 permettant de faire varier la position de ladite chandelle qui est boulonnée sur ladite traverse. Dans le même but, la traverse 3 est réglable en hauteur par rapport aux montants 1 qui présentent à cet effet une pluralité de trous de fixation 24.

Lorsqu'on doit accrocher deux cycles sur le support ceux-ci sont maintenus écartés l'un de l'autre à l'aide d'entretoises 25 comportant à chacune de leurs extrémités un collier 26 analogue à celui 22 précité (figure 5).

Bien entendu la présente invention ne se limite pas au mode de réalisation décrit et représenté mais s'étend, au contraire, à toutes variantes de formes et dimensions dans le cadre défini par les revendications.

C'est ainsi, entre autres, qu'il est possible de fixer une potence 16 sur la traverse 2 et l'autre sur l'un des montants 1.

## Revendications

1. Support pour cycles constitué par deux montants (1) réunis par des traverses (2, 3), comportant des potences de réception (16) des cycles et des moyens de fixation sur le pare-chocs (P) d'un véhicule automobile, caractérisé en ce que la fixation de chaque montant (1) sur le pare-chocs (P) s'effectue par l'entremise de deux sangles inextensibles (6 et 7) pouvues chacune d'un crochet (8) à l'une de leurs extrémités pour saisir respectivement le bord supérieur et celui inférieur du par-chocs, les deux autres extrémités desdites sangles étant rendues solidaires dudit montant et l'une, au moins, étant soumise à l'action d'un dispositif de mise en tension (10, 11, 12).

2. Support pour cycles selon la revendication 1, caractérisé en ce que les deux sangles (6 et 7) de chaque montant sont engagées entre deux galets (9) du montant correspondant sur lesquels elles s'enroulent partiellement, l'extrémité de la première sangle (6) étant fixée directement au montant (1) tandis que l'extrémité de la seconde sangle est fixée au montant par l'entremise du dispositif de mise en tension (10, 11, 12).

3. Support pour cycles selon la revendication 1, caractérisé en ce que le point de fixation de la première sangle (6) est réglable.

4. Support pour cycles selon l'une quelconque des revendications 1 à 3, caractérisé en ce que la fixation des potences (16) sur les montants (1) est réglable en hauteur.

5. Support pour cycles selon la revendication 4, caractérisé en ce que des moyens (21, 25, 26) sont prévus pour maintenir les cycles sur les potences et pour éviter leur pivotement latéral.

6. Support pour cycles selon la revendication 4, caractérisé en ce que l'une des potences est fixée sur la traverse (2) tandis que l'autre est fixée sur l'un des montants (1).

## Claims

1. Cycle fixture comprising two uprights (1) joined by cross-bars (2.3.) fitted with cycle acceptance brakcets (16) and attachments to the pumper (P) of the automobile ; the attachment of each upright (1) to the bumper (P) is provided by two inextensible straps (6 and 7), each fitted with a hook (8) at one end, to grip respectively the upper edge and lower edge of the bumper ; both ends of these straps are made integral with the upright and at least one is subjected to a tensioning machine (10, 11, 12).

2. Cycle fixture in accordance with claim 1, in which the two straps (6 and 7) of each upright are locked between two disks (9) of the corresponding upright on which they are partly wound ; the end of the first strap (6) is attached directly to the upright by means of the tensioning machine (10, 11, 12).

3. Cycle fixture in accordance with claim 1, in which the attachment lug of the first strap (6) is adjustable.

4. Cycle fixture in accordance with any claim from 1 to 3, in which the assembly of brackets (16) on the uprights (1) is vertically adjustable.

5. Cycle fixture in accordance with claim 4, in which fittings (21, 25, 26) are provided to maintain the cycles of the brackets and to prevent them swinging sideways.

6. Cycle fixture in accordance with claim 4, in which one bracket is fixed to the cross-beam (2) and the other to one upright (1).

## Ansprüche

1. Ständer für Fahrräder bestehend aus zwei senkrechten Stäben (1) miteinander verbunden durch Quenstangen (2, 3), die Rahmenträger (16) für Fahrräder und Befestigungsmittel auf der Stoßbstange (P) eines Kraftfahrzeuges enthalten, gekennzeichnet dadurch, daß die Befestigung von jedem senkrechten Stab (1) auf der Stoßstabge (P) mittels zweier anausdehnbarer Gurtbänhder (6 und 7) erfolgt ; jedes Gurtband ist an einem Ende mit einem Haken versehen, um jeweils die Oberkante und Unterkante der Stoßstabge zu fassen, die beiden anderen Enden der schon erwähnten Gurtbänder sind abhängig von dem bereits erwähnten sqenkrechten Stab und mindestens ein Ende unterliegt der Wirkung einer Spannvorrichtung (10, 11, 12).

2. Ständer für Fahrräder gemäß Anspruch 1, gekennzeichnet dadurch, daß die beiden Gurtbänder (6 und 7) eines jeden senkrechten Stabes
zwischen zwei Gleitrollen (9) des entsprechenden
senkrechten Stabes eingefügt sind, um die herum
sie teilweise verlaufen, das Ende des ersten Gurtbandes (6) ist unmittelbar am senkrechten Stab
befestigt (1), während das Ende des zweiten
Gurbandes mittels Spannvorrichtung befestigt ist
(10, 11, 12).

3. Ständer für Fahrräder gemäß Anspruch 1,
gekennzeichnet dadurch, daß der Befestigungspunkt des ersten Gurtbandes (6) verstellbar ist.

4. Ständer für Fahrräder gemäß irgendeiner
der Ansprüche 1 bis 3, gekennzeichnet dadurch
daß die Befestigung der Rahmenträger (16) in der
Höhe verstellbar ist.

5. Ständer für Fahrräder gemäß Anspruch 4,
gekennzeichnet dadurch, daß Befestigungsmittel
(21, 25, 26) vorgesehen sind, um die Fahrräder
auf den Rahmenträger zu halten und um ihre
seitliche Schwankung zu vermeiden.

6. Ständer für Fahrräder nach Anspruch 4,
gekennzeichnet dadurch, daß einer der Rahmenträger auf der Querstange befestigt ist, während
der andere auf einem der senkrechten Stäbe
befestigt ist.

0 016 497

Fig.1

Fig.5

Fig.4

Fig.2

Fig.3